# EUROPÄISCHE PATENTSCHRIFT

(11) **EP 0 680 118 B1**
(45) Veröffentlichungstag und Bekanntmachung des Hinweises auf die Patenterteilung: **08.07.1998**
(21) Anmeldenummer: 95106193.6
(22) Anmeldetag: 26.04.1995
(51) Int. Cl.: H01S 3/00, H01S 3/10, G02F 1/35, H01S 3/23

(54) **Vorrichtung und Verfahren zur Erzeugung kurzer Laserpulse**
Method and device for short laser pulse generation
Méthode et dispositif pour la génération d'impulsions laser courtes

(30) Priorität: 27.04.1994 DE 4414585
(43) Veröffentlichungstag der Anmeldung: 02.11.1995
(73) Patentinhaber: Deutsches Zentrum für Luft- und Raumfahrt e.V., 53175 Bonn (DE)
(72) Erfinder: Riede, Wolfgang, D-75417 Mühlacker (DE); Franck, Jerome, Bolling AFB, Washington DC 20332-0001 (US)
(74) Vertreter: Hoeger, Stellrecht & Partner

(56) Entgegenhaltungen:
- WO-A-93/14541
- US-A- 5 268 787
- OPTICS AND SPECTROSCOPY, Bd. 63, Nr. 4, Oktober 1987 WASHINGTON US, Seiten 417-418, V.B.IVANOV ET AL. 'Successive SRS compression of picosecond light pulses'
- SOVIET JOURNAL OF QUANTUM ELECTRONICS, Bd. 18, Nr. 9, September 1988 WOODBURY, NEW YORK US, Seiten 1092-1094, P.P.PASHININ ET AL 'Regenerative YAG:Nd3+ amplifier with a stimulated Brillouin scattering mirror'
- JOURNAL OF THE OPTICAL SOCIETY OF AMERICA - B, Bd. 5, Nr. 9, September 1988 NEW YORK US, Seiten 1957-1961,
- OPTICAL ENGINEERING, Bd. 31, Nr. 2, Februar 1992 BELLINGHAM US, Seiten 328-334, XP 000257542 S.JACKEL ET AL. 'Non linear optical isolator based on high-reflectivity Brillouin mirrors and their application to adavanced lasers'

## Beschreibung

Die Erfindung betrifft eine Vorrichtung zur Erzeugung kurzer Laserpulse, umfassend einen Laseroszillator, welcher einen ersten Laserpuls erzeugt, ein pulskomprimierendes Element, welches den ersten Laserpuls durch stimulierte Brillouinstreuung als zeitlich verkürzten Laserpuls reflektiert und einen ersten Strahlengang, in welchem der Laseroszillator und das pulskomprimierende Element angeordnet sind und längs welchem der erste Laserpuls von dem Laseroszillator zum pulskomprimierenden Element wandert.

Derartige, aus dem Stand der Technik bekannte Vorrichtungen verwenden üblicherweise Laseroszillatoren, welche erste Laserpulse mit Zeitdauern im Nanosekundenbereich, das heißt vorzugsweise im Bereich einiger oder einiger zehn Nanosekunden erzeugen. Diese Laserpulse werden dann durch einmalige Reflexion in einem pulskomprimierenden Element verkürzt.

Der Nachteil dieser Vorrichtung ist darin zu sehen, daß die Pulsdauer des zeitlich verkürzten oder komprimierten Laserpulses vom Medium im pulskomprimierenden Element abhängig ist und insbesondere nicht die Möglichkeit besteht, Laserpulse zu erzeugen, deren Pulsdauer vorgebbar ist.

Der Erfindung liegt daher die Aufgabe zugrunde, eine Vorrichtung und ein Verfahren zu schaffen, die die Möglichkeit eröffnen, Laserpulse mit vorgehbarer Pulsdauer zu erzeugen.

Diese Aufgabe wird bei einer Erfindung der eingangs beschriebenen Art erfindungsgemäß dadurch gelöst, daß die Vorrichtung einen Reflexionsast aufweist, in welchem der zeitlich verkürzte zurückreflektierte Laserpuls nach Austritt aus dem pulskomprimierenden Element eintritt, daß der Reflexionsast den zeitlich verkürzten Laserpuls mit einem Reflexionselement wieder in das pulskomprimierende Element zur weiteren zeitlichen Verkürzung zurückreflektiert und daß in einem Reflexionsstrahlengang zwischen dem Reflexionselement und dem pulskomprimierenden Element ein Auskoppelelement vorgesehen ist, mit welchem der Laserpuls aus dem Reflexionsstrahlengang auskoppelbar ist.

Der Vorteil der erfindungsgemäßen Lösung ist darin zu sehen, daß diese eine einfache Möglichkeit darstellt, dasselbe pulskomprimierende Element mehrfach einzusetzen und dadurch eine mehrfache zeitliche Verkürzung des Laserpulses zu erreichen, wobei die Verkürzung des Laserpulses durch die Zahl der Durchläufe durch den Reflexionsstrahlengang auswählbar und somit auch variabel vorgebbar ist. Das Auskoppelelement dient dabei dazu, nach der ausgewählten und vorgegebenen Zahl von Durchläufen durch den Reflexionsstrahlengang den Laserpuls auszukoppeln, der dann eine definierte Pulsdauer aufweist.

Besonders vorteilhaft ist es dabei, wenn eine Steuerung für das Auskoppelelement vorgesehen ist, welches dieses so ansteuert, daß nach einer vorgebbaren Zahl von Reflexionen in dem pulskomprimierenden Element das Auskoppelelement den Laserpuls aus dem Reflexionsstrahlengang auskoppelt.

Zweckmäßigerweise ist die Steuerung mit einem Detektor versehen, welcher das Auftreten eines reflektierten Laserpulses erfaßt.

Im einfachsten Fall ist dabei vorgesehen, daß die Steuerung einen Detektor aufweist, welcher die Reflexion eines Laserpulses in dem pulskomprimierenden Element erfaßt.

Alternativ dazu ist es aber ebenfalls vorteilhaft, den Detektor dem Reflexionsstrahlengang zuzuordnen und so anzuordnen, daß dieser erfaßt, wenn der Laserpuls den Reflexionsstrahlengang durchläuft.

Eine weitere Möglichkeit besteht darin, mit dem Detektor zu erfassen, wenn ein Laserpuls von dem Reflexionselement des Reflexionsastes wieder zurück zum pulskomprimierenden Element reflektiert wird.

Das Auskoppelelement könnte beispielsweise ein kippbarer Spiegel sein.

In Anlehnung an die Verfahren zur Pulsauswahl bei gepulsten Lasern ist vorzugsweise vorgesehen, daß das Auskoppelelement ein in dem Reflexionsstrahlengang angeordnetes ansteuerbares polarisationsdrehendes Element und einen in dem Reflexionsstrahlengang angeordneten Polarisationsstrahlteiler umfaßt, welcher in Abhängigkeit von der Polarisationsrichtung des Laserpulses für diesen transmissiv oder reflektiv ist.

Je nach Ansteuerung des polarisationsdrehenden Elements besteht damit die Möglichkeit, den Laserpuls durch den Polarisationsstrahlteiler unreflektiert hindurchwandern zu lassen, oder vom Polarisationsstrahlteiler reflektieren zu lassen, um diesen aus dem Reflexionsstrahlengang auszukoppeln.

Ein besonders vorteilhaftes Ausführungsbeispiel der erfindungsgemäßen Lösung sieht vor, daß das pulskomprimierende Element so ausgebildet ist, daß eine Wechselwirkung zwischen dem in das pulskomprimierende Element eintretenden Laserpuls und den akustischen Phononen über weniger als eine halbe Länge der Pulsdauer erfolgt, um lediglich eine suboptimale zeitliche Verkürzung des Laserpulses zu erhalten und somit die Vielzahl der möglichen Verkürzungen auszunützen, um damit eine möglichst große Bandbreite von Pulslängen zur Verfügung steht, aus welchen die gewünschte Pulslänge durch Vorgabe der Zahl von Durchläufen durch den Reflexionsstrahlengang auswählbar ist.

Als pulskomprimierendes Element kann eine Vielzahl von bislang für stimulierte Brillouinstreuung geeigneten pulskomprimierenden Elementen zum Einsatz kommen. Insbesondere ist vorteilhafterweise vorgesehen, daß das pulskomprimierende Element ein einen konvergierenden Strahlenverlauf erzeugendes Element aufweist. Dieses Element kann entweder eine Linse oder ein Wellenleiter sein, durch welchen der konvergierende Strahlenverlauf erzeugt wird, wobei dieser konvergierende Strahlenverlauf dann in einem hinsichtlich stimulierter Brillouinstreuung aktiven Medium liegt.

Als hinsichtlich stimulierter Brillouinstreuung aktives Medium ist vorzugsweise vorgesehen, daß dieses ein Gas oder eine Flüssigkeit ist.

Bei Verwendung einer Linse für die Erzeugung des konvergierenden Strahlenverlaufs ist vorzugsweise vorgesehen, daß diese eine lange Brennweite aufweist, und daß der konvergierende Strahlenverlauf im wesentlichen innerhalb des aktiven Mediums liegt.

Besonders vorteilhaft ist es bei der erfindungsgemäßen Lösung, wenn der jeweils nächstfolgende in das pulskomprimierende Element eintretende Laserpuls eine größere maximale Intensität aufweist, als der vorhergehende.

Ferner ist es auch vorteilhaft, wenn der konvergierende Strahlenverlauf eine Länge aufweist, die ein Mehrfaches des Abstandes zwischen den Bereichen des konvergierenden Strahlenverlaufes aufweist, in welchen aufeinanderfolgende Laserpulse im wesentlichen dieselbe Intensität erreichen.

Vorzugsweise ist vorgesehen, daß die das aktive Medium beinhaltende Pulskompressionszelle des pulskomprimierenden Elements eine Länge aufweist, die ein mehrfaches eines Abstandes beträgt, der zwischen den Bereichen des konvergierenden Strahlenverlaufs auftritt, in denen aufeinanderfolgende Laserpulse im wesentlichen die selbe Intensität erreichen.

Eine derartige Ausbildung der Pulskompressionszelle ist insbesondere dann von großem Vorteil, wenn in dem pulskomprimierenden Element zusätzlich zur zeitlichen Verkürzung des Laserpulses aufgrund stimulierter Brillouinstreuung noch eine Pulsverkürzung durch Plasmaerzeugung im aktiven Medium der Pulskompressionszelle erfolgt.

Eine derartige Plasmaerzeugung schafft die Möglichkeit, eine zusätzliche Pulsverkürzung zu erreichen, da bei Überschreiten der für die Plasmaerzeugung erforderlichen Intensität das in dem aktiven Medium entstehende Plasma die gesamte restliche Energie des eintretenden Laserpulses absorbiert.

In diesem Fall besteht bei Ausbilden der Pulskompressionszelle als lange Zelle und Ausbilden des den konvergierenden Strahlenverlaufes erzeugenden Elements mit einem langen konvergierenden Strahlenverlauf die Möglichkeit, daß die von aufeinanderfolgenden Laserpulsen erzeugten Plasmen nicht am selben Ort im laseraktiven Medium liegen, sondern den Abstand voneinander aufweisen, den die Bereiche des konvergierenden Strahlenverlaufs voneinander haben, in denen bei aufeinanderfolgenden Laserpulsen im wesentlichen die selbe Intensität vorliegt.

Um bei der erfindungsgemäßen mehrfachen zeitlichen Verkürzung und Reflexion eines Laserpulses in dem pulskomprimierenden Element diese möglichst optimal zu erhalten, ist vorteilhafterweise vorgesehen, daß der Reflexionsstrahlengang so dimensioniert ist, daß die den reflektierten Laserpuls erzeugenden akustischen Phononen in dem pulskomprimierenden Element abgeklungen sind, bis der in dem Reflexionsast reflektierte Laserpuls wieder in das pulskomprimierende Element eintritt. Diese Lösung hat den großen Vorteil, daß damit alle Störungen bei der Ausbildung der akustischen Phononen zur Brillouinstreuung des neu in das pulskomprimierende Element eintretenden Laserpulses vermieden werden.

Hinsichtlich der Ausbildung des Reflexionsastes sind im Rahmen der erfindungsgemäßen Lösung die unterschiedlichsten Möglichkeiten denkbar. So sieht ein vorteilhaftes Ausführungsbeispiel vor, daß der Reflexionsast ein passives Reflexionselement, beispielsweise einen Spiegel, für den Laserpuls umfaßt, welches diesen zum pulskomprimierenden Element zurückreflektiert.

Alternativ dazu ist vorgesehen, daß der Reflexionsast ein aktives Reflexionselement für den Laserpuls aufweist, welches diesen zum pulskomprimierenden Element zurückreflektiert.

Beispielsweise ist das aktive Reflexionselement ein aufgrund stimulierter Brillouinstreuung den Laserpuls reflektierendes Element, wobei die stimulierte Brillouinstreuung auch so erfolgen kann, daß sie lediglich zu einer unwesentlichen zeitlichen Verkürzung des Laserpulses führt. Ein derartiges besonders vorteilhaftes aktives Reflexionselement ist beispielsweise als zweites pulskomprimierendes Element ausgebildet, welches damit zu einer weiteren zeitlichen Verkürzung des Laserpulses führt.

Besonders vorteilhaft ist dabei ein Ausführungsbeispiel, bei welchem das zweite pulskomprimierende Element identisch ausgebildet ist wie das erste pulskomprimierende Element, so daß aufgrund der Tatsache, daß die Reflexion des Laserpulses phasenkonjugiert erfolgt, sämtliche Verzerrungen des Laserpulses beim Durchlaufen des Reflexionsstrahlengangs ausgeglichen werden.

Hinsichtlich der Ausbildung des Reflexionsastes wurden bislang keine näheren Angaben gemacht. Um eine möglichst große Leistung beim zeitlich verkürzten Laserpuls zu erhalten, ist vorteilhafterweise vorgesehen, daß der Reflexionsast ein Verstärkerelement für den Laserpuls umfaßt.

Dieses Verstärkerelement kann in unterschiedlichster Art und Weise ausgebildet sein.

So sieht ein vorteilhaftes und besonders einfach aufgebautes Ausführungsbeispiel vor, daß der Reflexionsast den Laseroszillator umfaßt und das laseraktive Medium des Laseroszillators das Verstärkerelement im Reflexionsast bildet.

In diesem sehr einfachen Fall ist außerdem vorgesehen, daß ein Endspiegel des Laseroszillators das passive Reflexionselement des Reflexionsastes bildet.

Ein alternatives Ausführungsbeispiel der erfindungsgemäßen Lösung sieht vor, daß diese einen dem Laseroszillator nachgeordneten Laserverstärker umfaßt und daß der Laserverstärker in dem Reflexionsast angeordnet ist.

Bei einem derartigen Ausführungsbeispiel wäre es prinzipiell denkbar, daß der Reflexionsast auch den Laseroszillator umfaßt. Noch vorteilhafter ist es jedoch, wenn der Reflexionsast den Laseroszillator nicht mehr umfaßt und als Reflexionselement des Reflexionsastes ein zwischen dem Laseroszillator und dem Laserverstärker angeordneter optischer Isolator dient. Dies hat den großen Vorteil, daß einerseits eine Zerstörung des Laseroszillators ausgeschlossen wird und andererseits die Verluste beim Eintritt des Laserpulses in den Laseroszillator über dessen Auskoppelspiegel entfallen.

Vorzugsweise ist der optische Isolator aus einem den Laserpuls bei Überschreiten eines Intensitätsschwellwertes reflektierenden Medium ausgebildet ist.

Ein derartiges Medium ist im einfachsten Fall ein hinsichtlich stimulierter Brillouinstreuung aktives Medium, welches den Laserpuls bei Überschreiten einer Schwellintensität für die stimulierte Brillouinstreuung im wesentlichen zurückreflektiert.

Ein derartiger optischer Isolator kann bei Verwendung eines hinsichtlich stimulierter Brillouinstreuung aktiven Mediums noch vorteilhafterweise auch als pulskomprimierendes Element ausgebildet sein, welches den Laserpuls durch stimulierte Brillouinstreuung nicht nur zurückreflektiert sondern auch zeitlich verkürzt. Es besteht damit die Möglichkeit, als optischen Oszillator noch ein zweites pulskomprimierendes Element einzusetzen, so daß eine additive Pulskomprimierung erfolgt.

In dem Fall, in dem der Reflexionsast vom ersten Strahlengang abzweigt und ein reflektierendes Element umfaßt, ist ebenfalls vorteilhafterweise in diesem Reflexionsast ein Laserverstärker vorgesehen, eine zusätzliche Verstärkung beim Hin- und Herwandern des Laserpulses in dem Reflexionsast bewirkt.

Insbesondere ist es dabei vorteilhaft, wenn der Laseroszillator außerhalb des Reflexionsstrahlengangs angeordnet ist, so daß eine Einkopplung des ersten Laserpulses in den Reflexionsstrahlengang, beispielsweise über einen Polarisationsstrahlteiler zu erfolgen hat.

In diesem Fall ist es besonders vorteilhaft, wenn in dem Reflexionsstrahlengang ein ansteuerbares polarisationsdrehendes Element vorgesehen ist, welche den Laserpuls bei einer für eine Hin- und Herreflexion im Reflexionsstrahlengang erforderlichen Polarisation hält.

Ferner wird die erfindungsgemäße Aufgabe auch noch durch ein Verfahren zum Erzeugen kurzer Pulse gelöst, bei welchem ein erster Laserpuls in einem Laseroszillator erzeugt wird, der erste Laserpuls in einem pulskomprimierenden Element durch stimulierte Brillouinstreuung zeitlich verkürzt und zurückreflektiert wird und in einem ersten Strahlengang, in welchem der Laseroszillator und das pulskomprimierende Element angeordnet werden, von dem Laseroszillator zum pulskomprimierenden Element wandert, wobei erfindungsgemäß der zeitlich verkürzte zurückreflektierte Laserpuls nach Austritt aus dem pulskomprimierenden Element in einem Reflexionsast aufgenommen und von einem Reflexionselement wieder in das pulskomprimierende Element zur weiteren zeitlichen Verkürzung zurückreflektiert wird und der Laserpuls aus einem Reflexionsstrahlengang zwischen dem Reflexionselement und dem pulskomprimierenden Element mittels eines Auskoppelelements ausgekoppelt wird.

Besonders vorteilhaft ist es dabei, wenn der Laserpuls nach einer vorgebbaren Zahl von Durchläufen durch den Reflexionsstrahlengang ausgekoppelt wird.

Hierzu ist zweckmäßigerweise vorgesehen, daß die Zahl der Durchläufe des Laserpulses durch den Reflexionsstrahlengang mittels eines Detektors erfaßt wird.

Weitere vorteilhafte Ausbildungen des vorstehend beschriebenen Verfahrens entsprechen den vorstehend beschriebenen vorteilhaften Merkmalen der erfindungsgemäßen Vorrichtung.

Weitere Merkmale und Vorteile der Erfindung sind ferner Gegenstand der nachfolgenden Beschreibung sowie der zeichnerischen Darstellung einiger Ausführungsbeispiele.

In der Zeichnung zeigen:
- Fig. 1: eine schematische Darstellung einer Vorrichtung zur Erzeugung kurzer Pulse mittels stimulierter Brillouinstreuung gemäß dem Stand der Technik;
- Fig. 2: eine schematische Darstellung der Mechanismen bei stimulierter Brillouinstreuung;
- Fig. 3: ein erstes Ausführungsbeispiel einer erfindungsgemäßen Vorrichtung in einer schematischen Darstellung ähnlich Fig. 1;
- Fig. 4: eine Variante des ersten Ausführungsbeispiels;
- Fig. 5: eine schematische Darstellung der Mechanismen bei stimulierter Brillouinstreuung mit zusätzlicher Plasmaerzeugung;
- Fig. 6: eine schematische Darstellung von Lagen der Plasmen bei mehrfacher Hin- und Herreflexion der Laserpulse und Mechanismen gemäß Fig. 5;
- Fig. 7: eine schematische Darstellung eines zweiten Ausführungsbeispiels ähnlich Fig. 1 und
- Fig. 8: eine schematische Darstellung eines dritten Ausführungsbeispiels.

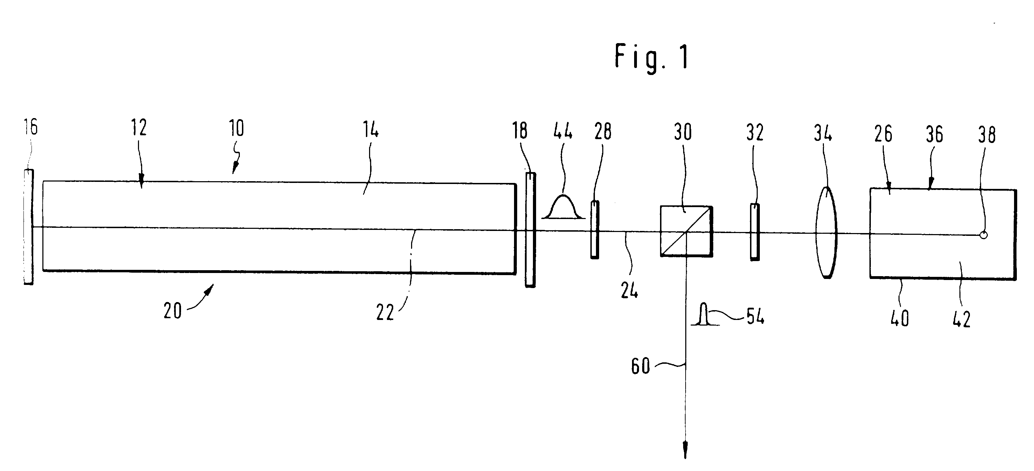

Eine aus dem Stand der Technik bekannte Vorrichtung zur Erzeugung kurzer Pulse, in Fig. 1 dargestellt und als Ganzes mit 10 bezeichnet, umfaßt einen Laseroszillator 12 mit einem laseraktiven Medium 14, welches vorzugsweise NdYAG ist, das in einem durch zwei Resonatorspiegel 16 und 18 gebildeten Resonator 20 angeordnet ist.

In dem Resonator 20 bildet sich längs einer optischen Achse 22 desselben Laserstrahlung aus, welche den Resonator 20 verläßt und einem als Ganzes mit 24 bezeichneten ersten Strahlengang zu einem pulskomprimierenden Element 26 folgt, wobei in dem ersten Strahlengang 24 auf den Resonator 20 folgend ein Polarisator 28 angeordnet ist, nachfolgend ein Polarisationsstrahlteiler 30, der so ausgebildet ist, daß die entsprechend dem Polarisator 28 polarisierte Laserstrahlung durch den Polarisationsstrahlteiler 30 ungehindert hindurchtritt, im Anschluß an diesen durch ein polarisationsdrehendes Element 32 hindurchtritt und dann in das pulskomprimierende Element 26 eintritt, welches einerseits eine einen konvergierenden Strahlenverlauf erzeugendes Element 34, beispielsweise eine fokussierende Linse, und andererseits eine Pulskompressionszelle 36 aufweist, in welcher ein Fokusbereich 38 des den konvergierenden Strahlenverlauf erzeugenden Elements 34 liegt. Die Pulskompressionszelle 36 umfaßt dabei ein Gehäuse 40, in welchem ein aktives Medium angeordnet ist, welches für die Erzeugung akustischer Phononen und die dadurch bedingte stimulierte Brillouinstreuung verantwortlich ist.

Der Laseroszillator 12 erzeugt vorzugsweise Pulse im Nannosekundenbereich, beispielsweise Pulse mit einer Pulsdauer von größenordnungsmäßig 20 ns.

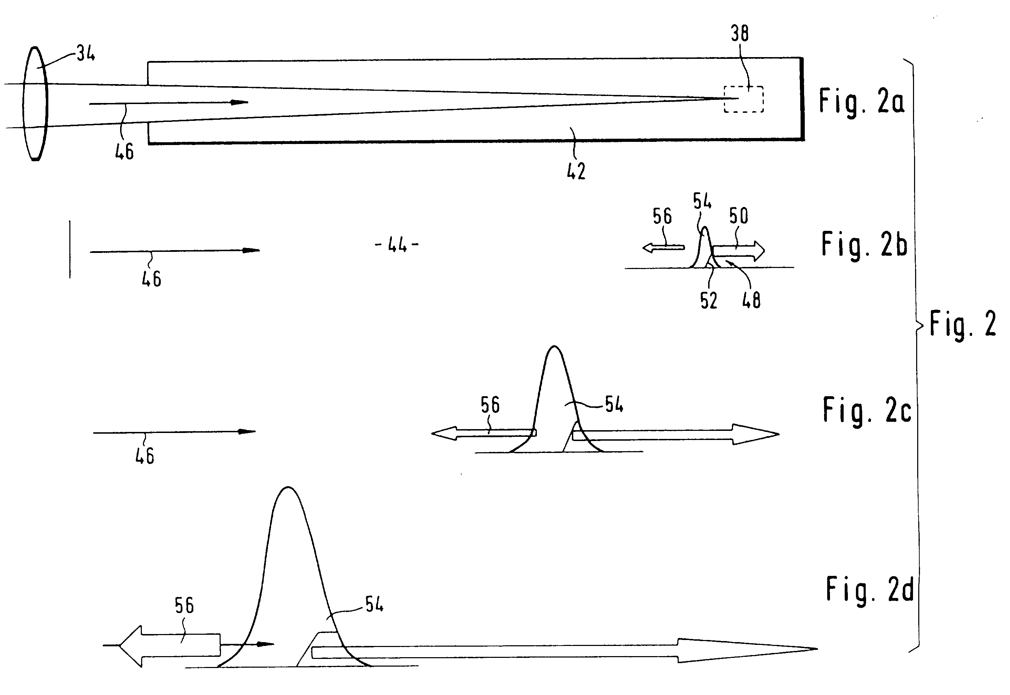

Diese ersten Laserpulse 44 treten nun aus dem Resonator 20 aus, werden durch den Polarisator 28 polarisiert und treten durch den Polarisationsstrahlteiler 30 ungehindert hindurch, sie erfahren lediglich durch das polarisationsdrehende Element in Form eines Lambda/4-Plättchens eine Polarisationsdrehung. Der Laserpuls tritt dann durch die Linse 34 hindurch und in Richtung einer Eintrittsrichtung 46 in das aktive Medium 42 ein, wobei eine Fokussierung auf den Fokusbereich 38 erfolgt (Fig. 2a), welcher tief im aktiven Medium 42 liegt. In dem Fokusbereich 38 wird nun nach Überschreiten einer Schwellintensität durch Erzeugung akustischer Phononen ein Ultraschallgitter, angedeutet mit 48 in Fig. 2b, erzeugt, welches sich mit Schallgeschwindigkeit in einer zur Eintrittsrichtung 46 parallelen Ausbreitungsrichtung 50 ausbreitet. Dieses Ultraschallgitter stellt ein Bragggitter dar und reflektiert mit seinem der Linse 34 zugewandten vorderen Bereich 52 den eintretenden ersten Laserpuls 44, wobei die Reflexion phasenkonjugiert erfolgt, so daß sich ein reflektierter phasenkonjugierter Laserpuls 54 entgegengesetzt zur Eintrittsrichtung 46 in Reflexionsrichtung 56 ausbreitet. Dadurch daß der vordere Bereich des Ultraschallgitters 48 sich mit Lichtgeschwindigkeit in der Reflexionsrichtung 56 in dem aktiven Medium 42 ausbreitet, wird der reflektierte Laserpuls 54 zeitlich komprimiert und weist, da er einen erheblichen Teil der Energie des ersten Laserpulses 44 aufnimmt, eine höhere Intensität als dieser auf (Fig. 2c, Fig. 2d), so daß der reflektierte Laserpuls 54 zeitlich verkürzt aber mit höherer Intensität als der erste Laserpuls 44 die Pulskompressionszelle 36 verläßt, wieder durch die Linse 34 hindurchtritt und durch eine weitere Drehung in polarisationsdrehenden Element 32 wiederum um Lambda/4 eine Polarisationsrichtung erhält, die u 90° gegenüber derjenigen des ersten Laserpulses 44 gedreht ist, so daß der Polarisationsstrahlteiler 30 den reflektierten und phasenkonjugierten Laserpuls 54 in einen zweiten Strahlengang 60 reflektiert, so daß der zeitlich verkürzte Laserpuls 54 entweder über den zweiten Strahlengang 60 direkt eingesetzt oder über ein weiteres pulskomprimierendes Element gegebenenfalls weiter verkürzt werden kann.

Der reflektierte Laserpuls 54 ist aufgrund der Doppler-Verschiebung durch die Bewegung des Ultraschallgitters mit Schallgeschwindigkeit gegenüber dem ersten Laserpuls frequenzverschoben, wobei die Frequenzverschiebung bei Gasen als aktives Medium 42 zwischen 400 und 800 MHz und bei Flüssigkeiten als aktives Medium 42 bei bis zu 3 GHz für eine Wellenlänge von Lambda = 1,06 ºm liegt.

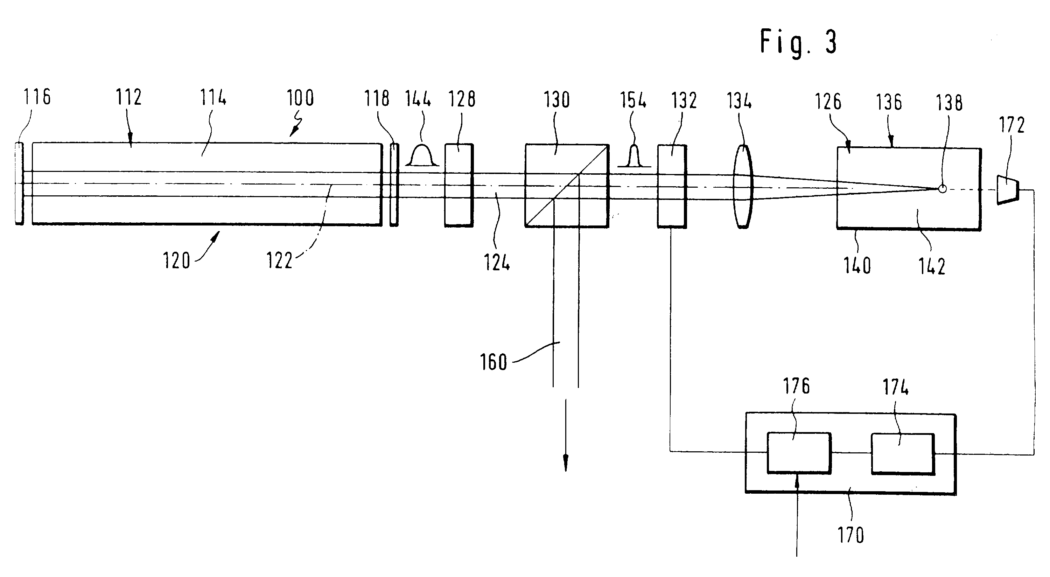

Bei einem ersten Ausführungsbeispiel der erfindungsgemäßen Lösung, dargestellt in Fig. 3, als Ganzes mit 100 bezeichnet, ist in gleicher Weise wie beim vorstehend beschriebenen Stand der Technik ein Laseroszillator 112 vorgesehen, mit einem laseraktiven Medium 114, das in einem Resonator 120 zwischen zwei Resonatorspiegeln 116 und 118 angeordnet ist. Der sich längs der optischen Achse 122 ausbreitende Laserstrahl gelangt über einen ersten Strahlengang 124 in das pulskomprimierende Element 126, wobei in dem ersten Strahlengang 124 ebenfalls ein Polarisator 128 und ein Polarisationsstrahlteiler 130 vorgesehen sind. Anstelle des passiven polarisationsdrehenden Elements 32 ist eine Pockelszelle 132 zwischen dem Polarisationsstrahlteiler 130 und dem pulskomprimierenden Element 126 angeordnet.

Das pulskomprimierende Element 126 umfaßt ebenfalls ein einen konvergierenden Strahlenverlauf erzeugendes Element 134, welches den Laserpuls in einen Fokusbereich 138 in dem Gehäuse 140 angeordneten aktiven Medium 142 in der Pulskompressionszelle 136 angeordnet ist.

In gleicher Weise wie beim Stand der Technik erzeugt der Laseroszillator 112 einen ersten Laserpuls 144, welcher - wie im Zusammenhang mit dem Stand der Technik beschrieben - in dem pulskomprimierenden Element 126 reflektiert wird und als zeitlich verkürzter phasenkonjugierter Laserpuls 154 aus dem pulskomprimierenden Element 126 auftritt. Die Pockelszelle 132 ist jedoch so gesteuert, daß weder die Polarisationsebene des ersten Laserpulses 144 noch die des reflektierten Laserpulses 154 verändert werden, so daß der reflektierte Laserpuls 154 längs des ersten Strahlengangs 124 durch den Polarisationsstrahlteiler zurück zum Laseroszillator 112 wandert und dort in dem laseraktiven Medium 114 verstärkt wird, aufgrund der Rückreflexion am Resonatorspiegel 116 wieder wie der erste Laserpuls 144 zurück zum pulskomprimierenden Element 126 wandert und in diesem erneut aufgrund stimulierter Brillouinstreuung eine Reflexion aufgrund derselben, bereits beschriebenen Mechanismen erfährt; so daß er als weiterer reflektierter Laserpuls 154' wiederum längs des ersten Strahlengangs 124 zurück zum Laseroszillator 112 wandert, verstärkt wird und wiederum in das pulskomprimierende Element 126 zur erneuten Reflexion und zeitlichen Verkürzung eintritt. Der erste Strahlengang 124 ist dabei mit dem Reflexionsstrahlengang identisch und bildet gleichzeitig auch den Reflexionsast.

Das heißt, der Laserpuls 154 kann so lange zwischen dem pulskomprimierenden Element 126 und dem Laseroszillator 112 hin- und herwandern und dabei stets eine Pulsverkürzung erfahren und zwar so lange, bis die theoretische Grenze der zeitlichen Verkürzung des Laserpulses 154 erreicht ist, deren Dauer dem Inversen der akustischen Frequenz entspricht.

Wird in diesem Fall die Pockelszelle 132 so angesteuert, daß sie die Polarisationsebene des aus dem pulskomprimierenden Element 126 kommenden reflektierten Laserpulses um 90° dreht, so wird dieser reflektierte Laserpuls dann vom Polarisationsstrahlteiler 130 in den zweiten Strahlengang 160 reflektiert.

Erfindungsgemäß ist vorgesehen, nach einer vorgebbaren Zahl von Hin- und Herreflexionen des Laserpulses die Pockelszelle 132 so anzusteuern, daß der aus dem pulskomprimierenden Element 126 austretende Laserpuls 154 von dem Polarisationsstrahlteiler 130 in den zweiten Strahlengang 160 reflektiert wird.

Um Laserpulse mit einer definierten Pulsdauer in den zweiten Strahlengang 160 zu erhalten, umfaßt das erste Ausführungsbeispiel gemäß Fig. 3 noch eine Steuerung 170, welche mit einem Detektor 172 verbunden ist, der auf einer dem den konvergierenden Strahlenverlauf erzeugenden Element 134 gegenüberliegenden Seite der Pulskompressionszelle 136 angeordnet ist und jeden in Eintrittsrichtung 46 in die Pulskompressionszelle 136 eintretenden und wieder reflektierten Laserpuls 154 aufgrund der sich in Eintrittsrichtung 46 durch die Pulskompressionszelle 136 hindurch ausbreitenden Strahlung detektiert. Die Steuerung 170 umfaßt über einen Zähler 174 die Zahl der vom Detektor 172 gezählten Laserpulse und vergleicht diese mit einer in einem Speicher 176 variabel eingebbaren Maximalzahl von Laserpulsen und steuert dann, wenn die in dem Speicher 176 gespeicherte Maximalzahl erreicht ist, die Pockelszelle 132 an, um den aus dem pulskomprimierenden Element 126 austretenden Laserpuls 154 hinsichtlich seiner Polarisation zu drehen, damit dieser von dem Polarisationsstrahlteiler 130 in den zweiten Strahlengang 160 reflektiert wird.

Mit dieser Steuerung besteht somit die Möglichkeit, in dem zweiten Strahlengang 160 stets Laserpulse 154 mit einer zeitlich verkürzten Pulsdauer zu erhalten, die variabel vorgebbar ist.

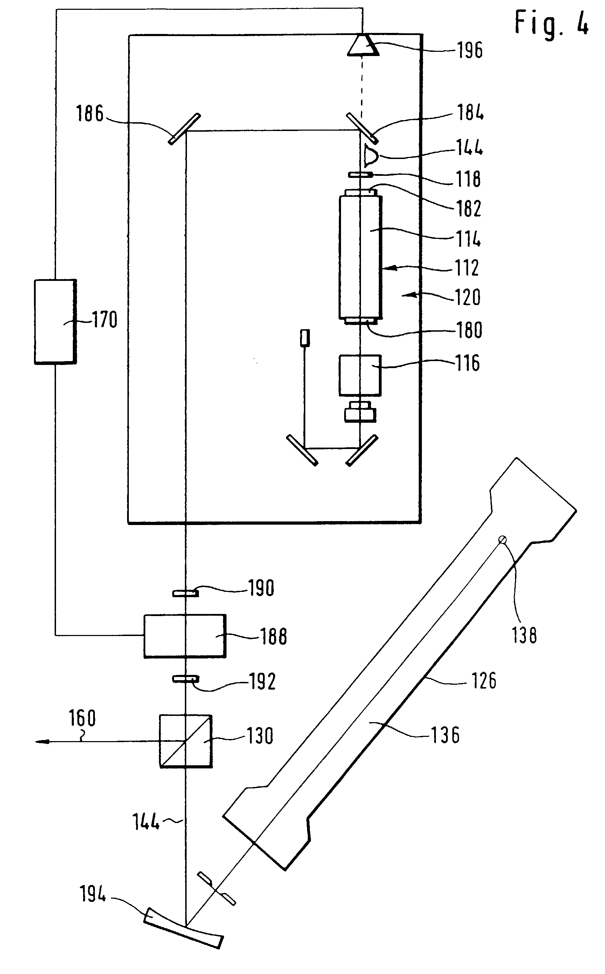

Bei einer Modifikation des ersten Ausführungsbeispiels, dargestellt in Fig. 4 sind diejenigen Teile, die mit dem ersten Ausführungsbeispiel identisch sind, mit den selben Bezugszeichen versehen. Diesbezüglich wird daher auf die Ausführungen zum ersten Ausführungsbeispiel der erfindungsgemäßen Lösung vollinhaltlich Bezug genommen.

Vor dem Resonatorspiegel 116 sitzt ein Güteschalter. Ferner sind in dem Resonator 120 beiderseits des laseraktiven Mediums 114 die Polarisationsebene jeweils um eine viertel Wellenlänge drehende Plättchen 180 und 182 angeordnet.

Der aus dem Laseroszillator 112 austretende Laserpuls 144 wird durch zwei Umlenkspiegel 184 und 186 umgelenkt und durchsetzt vor Erreichen des Polarisationsstrahlteilers 130 eine Pockelszelle 188, wobei beiderseits der Pockelszelle 188 ebenfalls zwei um eine viertel Wellenlänge die Polarisationsebene drehende Plättchen angeordnet sind.

Nach Hindurchtreten durch den Polarisationsstrahlteiler trifft der erste Laserpuls 144 auf einen sphärischen Spiegel 194, welcher aufgrund seiner langen Brennweite den Laserpuls 144 in den Fokusbereich 138 in dem pulskomprimierenden Element 126 fokussiert. Die Variante des ersten Ausführungsbeispiels gemäß Fig. 4 funktioniert im Prinzip genau gleich wie die des ersten Ausführungsbeispiels, mit dem einzigen Unterschied, daß ein reflektierter Laserpuls 154 dann ausgekoppelt wird, wenn er wieder aus dem Laseroszillator 112 austritt und in Richtung des Polarisationsstrahlteilers 130 läuft.

Zum Zählen der Laserpulse 154 ist ein Detektor 196 vorgesehen, welcher den durch den ersten Umlenkspiegel 184 hindurchtretenden Teil der aus dem Laserosziallator 112 austretenden Laserpulse 144 oder 154 detektiert und mit der Steuerung 170 verbunden ist, welche die Pockelszelle 188 ansteuert.

Im übrigen funktioniert die Variante des ersten Ausführungsbeispiels vom Prinzip her identisch wie das erste Ausführungsbeispiel.

Das erste Ausführungsbeispiel gemäß Fig. 3 oder dessen Variante gemäß Fig. 4 können so betrieben werden, daß eine Pulsverkürzung rein durch stimulierte Brillouinstreuung erfolgt, wie in Fig. 2 ausführlich beschrieben.

Es besteht aber auch die Möglichkeit, mit höheren Intensitäten zu arbeiten.

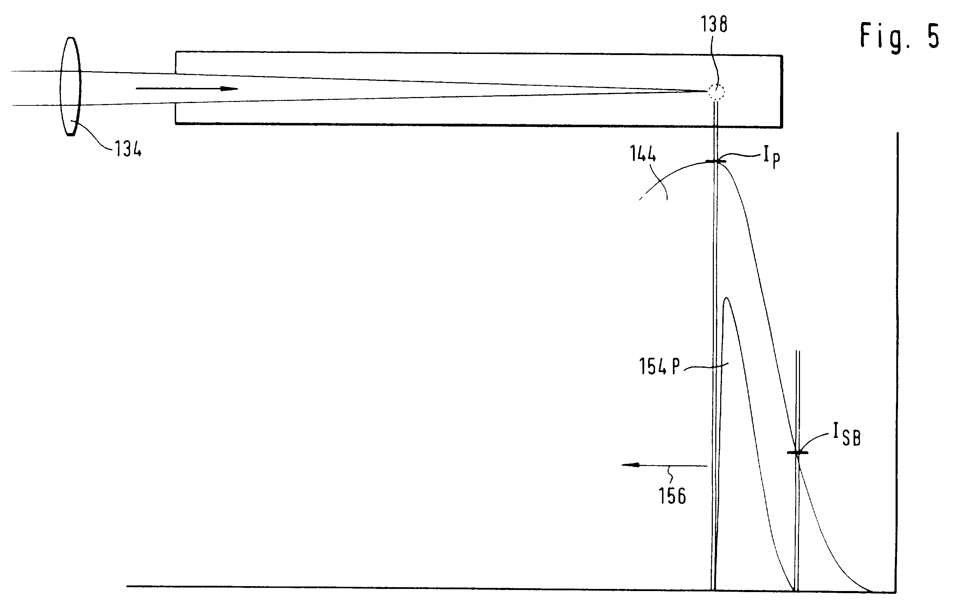

In diesem Fall erfolgt, wie in Fig. 5 dargestellt, im Fokusbereich 128 zunächst bei Erreichen einer Schwellintensität I_{SB} die Bildung des reflektierten Laserpulses 154 durch stimulierte Brillouinstreuung in der bereits beschriebenen Weise. Die Rückreflexion der Energie in Form des reflektierten Laserpulses 154 wird jedoch dann unterbrochen, wenn die Intensität des Laserpulses 144 die Schwelle I_{P} überschreitet. In diesem Fall bildet sich im Fokusbereich 138 ein Plasma, welches die gesamte Energie des eintretenden ersten Laserpulses 144 absorbiert. Hierdurch erfolgt eine zusätzliche Verkürzung des reflektierten Laserpulses 154, der entsprechend den im Zusammenhang mit Fig. 2 beschriebenen Mechanismen durch stimulierte Brillouinstreuung gebildet wird.

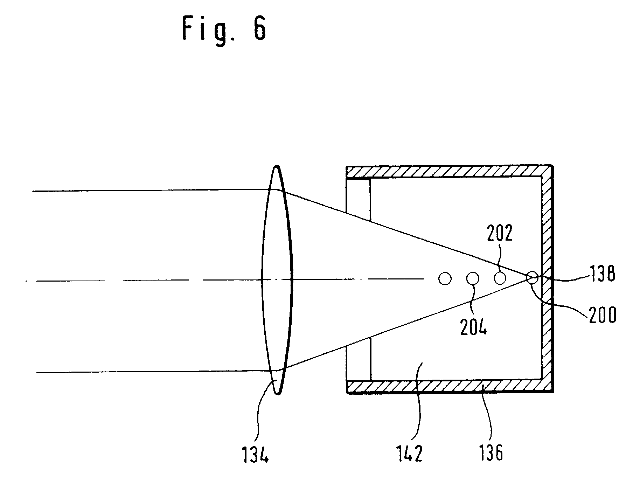

Dieser durch Plasmabildung verkürzte Laserpuls 154 P breitet sich jedoch in gleicher Weise wie der Laserpuls 154 in Reflexionsrichtung 156 auf und kann bei einem experimentellen Aufbau entsprechend Fig. 3 oder Fig. 4 wieder zurück zum Laseroszillator 112 wandern, von diesem verstärkt werden und wieder in die Pulskompressionszelle 136 eintreten. In diesem Fall findet jedoch, wie in Fig. 6 dargestellt, die Plasmabildung nicht im Fokusbereich 138 statt, sondern aufgrund der höheren Intensität des wiedereintretenden Laserpulses 154P bereits in einem weniger stark fokussierten Bereich des konvergierenden Strahlenverlaufs, so daß das zuerst gebildete Plasma 200 nicht mehr stört und das beim nächsten eintretenden Laserpuls 154P gebildete Plasma 202 in Richtung des den konvergierenden Strahlenverlauf erzeugenden Elements 134 versetzt liegt. Aufgrund der höheren Intensität wird auch die Intensität I_{SB} schneller erreicht sowie auch die Intensität I_{P}, so daß der nächste Laserpuls 154P sowohl durch stimulierte Brillouinstreuung verkürzt wird und zusätzlich noch durch Bildung des Plasmas 202.

In gleicher Weise wird auch dieser Laserpuls 154P wieder zurückreflektiert zum Laseroszillator 112, dort verstärkt und tritt erneut in die Pulskompressionszelle 136 ein wobei die Bildung des nächsten Plasmas 204 wiederum in Richtung des den konvergierenden Strahlenverlauf erzeugenden Elements 134 versetzt erfolgt.

Damit erfolgt die Reflexion der nächstfolgenden Laserpulse 154P stets an einem anderen Ort als die der vorausgehenden Laserpulse, so daß die Abklingzeit der Plasmen 200, 202 etc. keinen Einfluß auf die Rückreflexion des jeweils nächstfolgenden Laserpulses hat, vorausgesetzt, der nächstfolgende Laserpuls tritt erst dann in die Pulskompressionszelle 136 ein, wenn die akustischen Phononen, die an der stimulierten Brillouinstreuung des vorausgehenden Laserpulses 154 beteiligt waren, abgeklungen sind. Die Abklingzeit liegt je nach aktivem Medium 142 in der Größenordnung von mehreren Nannosekunden bis zur Größenordnung von 10 oder mehreren 10 Nannosekunden, so daß der erste Strahlengang 124 hinsichtlich seiner Länge entsprechend abgestimmt ist.

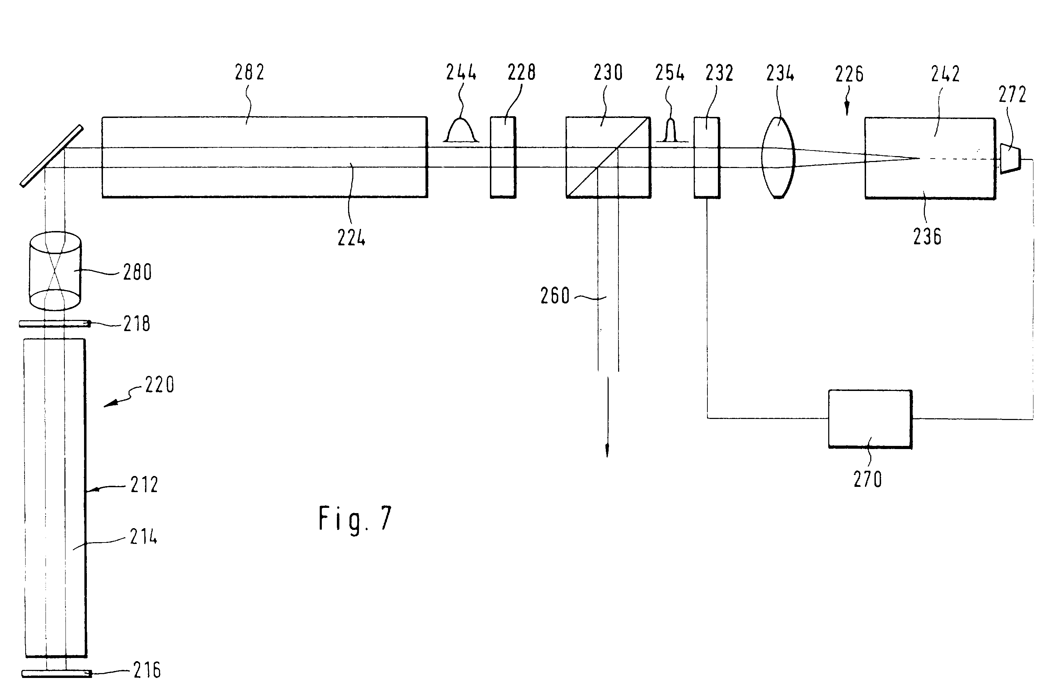

Bei einem zweiten Ausführungsbeispiel, dargestellt in Fig. 7 ist dem Laseroszillator 212 mit dem laseraktiven Medium 214, welches zwischen den Resonatorspiegel 216 und 218 des Resonators 220 sitzt, ein optischer Isolator 280 nachgeordnet, welcher einen zusätzlich zum Laseroszillator 212 in dem Strahlengang 224 angeordneten Laserverstärker 282 vom Laseroszillator 212 trennt.

Auf den Laserverstärker folgt ein Polarisator 228 und nachfolgend der Polarisationsstrahlteiler 230. Nach dem Polarisationsstrahlteiler 230 ist als polarisationsdrehendes Element die Pockelszelle 232 vorgesehen, und hierauf folgt, wie beim ersten Ausführungsbeispiel das pulskomprimierende Elemente 226, umfassend die Pulskompressionszelle 236 mit dem aktiven Medium 242 und das den konvergierenden Strahlenverlauf erzeugende Element 234, beispielsweise in Form einer Linse.

Auch beim zweiten Ausführungsbeispiel wird der Laserpuls 244 zunächst von dem Laseroszillator 212 erzeugt, im Laserverstärker 282 verstärkt, in dem pulskomprimierenden Element 226 aufgrund stimulierter Brillouinstreuung zeitlich verkürzt und als Laserpuls 254 zurückreflektiert, wobei dieser Laserpuls nunmehr erneut in den Laserverstärker 282 eintritt und in diesem verstärkt wird. Nach Durchlaufen des Laserverstärkers 282 wird der Laserpuls 254 jedoch vom optischen Isolator 280 reflektiert, so daß dieser nicht erneut in den Laseroszillator 212 eintritt.

Der optische Oszillator 280 ist dabei beispielsweise ebenfalls als Zelle ausgebildet, in welcher ein Medium angeordnet ist, das Strahlung aufgrund stimulierter Brillouinstreuung reflektiert. Der vom Laseroszillator 12 erzeugte Laserpuls 244 wird nun hinsichtlich seiner Intensität so dimensioniert, daß diese unterhalb der Schwelle für stimulierte Brillouinstreuung liegt, so daß dieser den optischen Isolator 280 ungehindert und unverändert passiert, während der durch das pulskomprimierende Element 226 reflektierte Laserpuls 254 bereits eine höhere Intensität aufweist, die durch den Laserverstärker 282 noch weiter verstärkt wird und somit über der Schwelle für stimulierte Brillouinstreuung im optischen Isolator 280 liegt, so daß der optische Isolator 280 den Laserpuls 254 nach Durchlaufen des Verstärkers 282 reflektiert und in mehr oder weniger großem Umfang noch zeitlich verkürzt. Dieser zurückreflektierte Laserpuls 254 durchläuft erneut den Laserverstärker 282, wird erneut verstärkt und tritt dann wiederum einerseits pulsverkürzt andererseits zusätzlich verstärkt in das pulskomprimierende Element 226 ein, in welchem eine erneute zeitliche Verkürzung und Reflexion erfolgt.

In gleicher Weise wie beim ersten Ausführungsbeispiel ist die identisch funktionierende Steuerung 270 mit dem Detektor 272 vorgesehen, welche nach einer bestimmten Zahl von auftretenden Laserpulsen 254 die Pockelszelle 232 ansteuert, dadurch eine Drehung der Polarisationsebene bewirkt, so daß dieser Laserpuls dann durch den Polarisationsstrahlteiler 230 in den zweiten Strahlengang 260 reflektiert wird und in diesem somit Laserpulse mit einer definierten verkürzten Pulsdauer erhältlich sind.

Hinsichtlich der Funktion der Steuerung 270 wird vollinhaltlich auf die Beschreibung der Steuerung 170 des ersten Ausführungsbeispiels Bezug genommen.

Im Gegensatz zum ersten Ausführungsbeispiel ist somit der Reflexionsstrahlengang nicht mit dem ersten Strahlengang 224 identisch, sondern der Reflexionsstrahlengang erstreckt sich zwischen dem optischen Isolator 280 und dem pulskomprimierenden Element 226 und der Reflexionsast umfaßt den Laserverstärker 282 und den optischen Isolator 280.

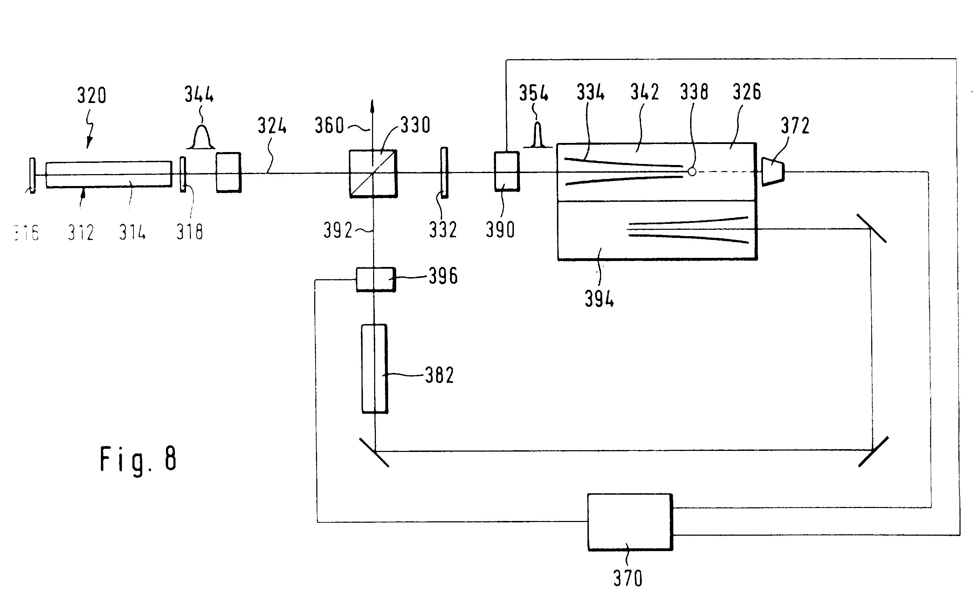

Bei einem dritten Ausführungsbeispiel, dargestellt in Fig. 8 ist ebenfalls ein Laseroszillator 312 vorgesehen, welcher einen Resonator 320 mit zwei Resonatorspiegel, 316 und 318 umfaßt, zwischen denen das laseraktive Medium 314 angeordnet ist. Auf den Laseroszillator 312 folgend ist im ersten Strahlengang 324 der Polarisationsstrahlenteiler 330 vorgesehen und darauf folgend ein polarisationdrehendes Element 332 sowie eine Pockelszelle 390. Auf diese folgt das pulskomprimierende Element 326, das in diesem Fall anstelle einer Linse als konvergierenden Strahlenverlauf erzeugendes Element 334 einen sich mit zunehmender Länge konisch verengenden Wellenleiter aufweist, welcher die Strahlung ebenfalls auf einen Fokusbereich 338 zusammenführt. In dem pulskomprimierenden Element 326 verlaufen dieselben, bereits ausführlich im Zusammenhang mit Fig. 2 dargestellten Prozesse, so daß ein reflektierter Laserpuls 354 entsteht, welcher phasenkonjugiert und pulsverkürzt ist und in dieser Form aus dem pulskomprimierenden Element 326 austritt, durch die Pockelszelle 390 hinsichtlich seiner Polarisationsrichtung um 90° gedreht wird, so daß dieser durch den Polarisationsstrahlteiler 330 reflektiert wird und zwar in einen Reflexionsast 392, in welchem ein Laserverstärker 382 angeordnet ist und welcher durch ein weiteres pulskomprimierendes Element 394 abgeschlossen ist, das in gleicher Weise ausgebildet ist und arbeitet, wie das pulskomprimierende Element 326, so daß der Laserstrahl 354 einerseits zeitlich verkürzt und andererseits phasenkonjugiert reflektiert wird und wieder den Laserverstärker 382 durchsetzt, vom Polarisationsstrahlteiler 330 reflektiert wird und somit wiederum in das pulskomprimierende Element 326 eintritt.

Der Reflexionsstrahlengang erstreckt sich somit zwischen dem pulskomprimierenden Element 394 und dem pulskomprimierenden Element 326. In diesem Reflexionsstrahlengang kann der Laserpuls 354 so lange hin- und herwandern, bis er ausreichend verkürzt ist. Zum Auskoppeln des Laserpulses ist in dem Reflexionsast 392, beispielsweise zwischen dem Laserverstärker 382 und dem Polarisationsstrahlteiler 330 eine weitere Pockelszelle 396 angeordnet, welche in der Lage ist, die Polarisationsebene um 90° zu drehen, so daß der von dem pulskomprimierenden Element 394 kommende, durch den Laserverstärker 382 hindurchlaufende Laserpuls nicht vom Polarisationsstrahlteiler 330 wiederum zum pulskomprimierenden Element 326 reflektiert wird, sondern durch dieses hindurchtritt in den zweiten Strahlengang 360. Um im zweiten Strahlengang 360 stets Laserpulse gleicher Pulsdauer zu erhalten, ist wiederum eine Steuerung 370 vorgesehen, welche zusammen mit einem Detektor 372 einerseits den Eintritt des ersten Laserpulses 344 in das pulskomprimierende Element 326 erkennt. Danach entsprechend die Pockelszelle 390 ansteuert und außerdem die Zahl der nachfolgend in das pulskomprimierende Element 326 eintretenden Laserpulse zählt und nach einer bestimmten Zahl von Laserpulsen 354 die Pockelszelle 396 zur Auskopplung derselben aus dem Reflexionsstrahlengang ansteuert, wie bereits ausführlich im Zusammenhang mit dem ersten Ausführungsbeispiel beschrieben.

Der Vorteil des dritten Ausführungsbeispiels ist darin zu sehen, daß durch vorzugsweise identisch ausgebildete pulskomprimierende Elemente 324 und 394 und die phasekonjugierte Reflexion der Laserpulse ein sukzessiver Ausgleich sämtlicher in den optischen Elementen des Reflexionsstrahlenverlaufs auftretenden Verzerrungen erfolgt.

Bei allen Ausführungsbeispielen ist vorzugsweise vorgesehen, daß die Länge der Pulskompressionszellen so ausgebildet ist, daß eine Wechselwirkung zwischen dem eintretenden Laserpuls und den akustischen Phononen über weniger als die halbe Länge der Pulsdauer erfolgt, um in mehreren Stufen die Pulskompression durchzuführen und damit hinsichtlich der erhältlichen Pulsdauer möglichst flexibel zu sein.

## Patentansprüche

1. Vorrichtung zur Erzeugung kurzer Laserpulse, umfassend einen Laseroszillator, welcher einen ersten Laserpuls erzeugt, ein pulskomprimierendes Element, welches den ersten Laserpuls durch stimulierte Brillouinstreuung als zeitlich verkürzten Laserpuls reflektiert und einen ersten Strahlengang, in welchem der Laseroszillator und das pulskomprimierende Element angeordnet sind und längs welchem der erste Laserpuls von dem Laseroszillator zum pulskomprimierenden Element wandert, **dadurch gekennzeichnet**, daß die Vorrichtung einen Reflexionsast aufweist, in welchem der zeitlich verkürzte zurückreflektierte Laserpuls (154, 254, 354) nach Austritt aus dem pulskomprimierenden Element (126, 226, 326) eintritt, daß der Reflexionsast den zeitlich verkürzten Laserpuls (154, 254, 354) mit einem Reflexionselement (116, 280, 394) wieder in das pulskomprimierende Element (126, 226, 326) zur weiteren zeitlichen Verkürzung zurückreflektiert und daß in einem Reflexionsstrahlengang zwischen dem Reflexionselement (116, 280, 394) und dem pulskomprimierenden Element (126, 226, 326) ein Auskoppelelement (130, 132, 230, 232; 330, 396) vorgesehen ist, mit welchem der Laserpuls (154, 254, 354) aus dem Reflexionsstrahlengang auskoppelbar ist.

2. Vorrichtung nach Anspruch 1, dadurch gekennzeichnet, daß eine Steuerung (170, 270, 370) für das Auskoppelelement (130, 132; 230, 232; 330, 396) vorgesehen ist, welche so ansteuert, daß nach einer vorgebbaren Zahl von Reflexionen in dem pulskomprimierenden Element (126, 226, 326) das Auskoppelelement (130, 132; 230, 232; 330, 396) den Laserpuls (154, 254, 354) aus dem Reflexionsstrahlengang auskoppelt.

3. Vorrichtung nach Anspruch 2, dadurch gekennzeichnet, daß die Steuerung (170, 270, 370) mit einem Detektor (172, 272, 372) versehen ist, welcher das Auftreten eines reflektierten Laserpulses (154, 254, 354) erfaßt.

4. Vorrichtung nach einem der voranstehenden Ansprüche, dadurch gekennzeichnet, daß das Auskoppelelement ein in dem Reflexionsstrahlengang angeordnetes ansteuerbares polarisationsdrehendes Element (132, 232, 396) und einen in dem Reflexionsstrahlengang angeordneten Polarisationsstrahlteiler (130, 230, 330) umfaßt.

5. Vorrichtung nach einem der voranstehenden Ansprüche, dadurch gekennzeichnet, daß das pulskomprimierende Element (126, 226, 326) so ausgebildet ist, daß eine Wechselwirkung zwischen dem in das pulskomprimierende Element eintretenden Laserpuls und den akustischen Phononen über weniger als eine halbe Pulsdauer des Laserpulses erfolgt.

6. Vorrichtung nach einem der voranstehenden Ansprüche, dadurch gekennzeichnet, daß der jeweils nächstfolgende, in das pulskomprimierende Element (126, 226, 326) eintretende Laserpuls (154, 254, 354) eine größere maximale Intensität aufweist als der vorhergehende.

7. Vorrichtung nach Anspruch 6, dadurch gekennzeichnet, daß das pulskomprimierende Element (126, 226, 326) einen einen konvergierenden Strahlenverlauf erzeugendes Element (134, 234, 334) aufweist, und daß der konvergierende Strahlenverlauf, der eine Länge aufweist, welche ein Mehrfaches des Abstandes zwischen den Bereichen (220, 202, 204) des konvergierenden Strahlenverlaufs aufweist, in welchen aufeinanderfolgende Laserpulse (154, 254, 354) im wesentlichen dieselbe Intensität erreichen.

8. Vorrichtung nach Anspruch 6 oder 7, dadurch gekennzeichnet, daß das pulskomprimierende Element (126, 226, 326) eine ein aktives Medium (142, 242, 342) beinhaltende Pulskompressionszelle (136, 236, 336) aufweist, mit einer Länge, die ein Mehrfaches des Abstandes beträgt, der zwischen den Bereichen (200, 202, 204) des konvergierenden Strahlenverlaufs auftritt, in denen aufeinanderfolgende Laserpulse (154, 254, 354) im wesentlichen dieselbe Intensität erreichen.

9. Vorrichtung nach Anspruch 8, dadurch gekennzeichnet, daß in dem pulskomprimierenden Element (126, 226, 326) zusätzlich zur zeitlichen Verkürzung des Laserpulses aufgrund stimulierter Brillouinstreuung noch eine Pulsverkürzung durch Plasmaerzeugung im aktiven Medium (142) der Pulskompressionszelle (136) erfolgt.

10. Vorrichtung nach einem der voranstehenden Ansprüche, dadurch gekennzeichnet, daß der Reflexionsstrahlengang so dimensioniert ist, daß die den reflektierten Laserpuls erzeugenden akustischen Phononen (48) in dem pulskomprimierenden Element (126, 226, 326) abgekungen sind, bis der in dem Reflexionsast reflektierte Laserpuls wieder in das pulskomprimierende Element (126, 226, 326) eintritt.

11. Vorrichtung nach einem der voranstehenden Ansprüche, dadurch gekennzeichnet, daß der Reflexionsast ein passives Reflexionselement (116) für den Laserpuls (154) umfaßt.

12. Vorrichtung nach einem der Ansprüche 1 bis 10, dadurch gekennzeichnet, daß der Reflexionsast ein aktives Reflexionselement (280, 394) für den Laserpuls (254, 354) aufweist, welches diesen zum pulskomprimierenden Element (226, 326) zurückreflektiert.

13. Vorrichtung nach Anspruch 12, dadurch gekennzeichnet, daß das aktive Reflexionselement ein aufgrund stimulierter Brillouinstreuung reflektierendes Element (280, 394) ist.

14. Vorrichtung nach Anspruch 12 oder 13, dadurch gekennzeichnet, daß das aktive Reflexionselement ein zweites pulskomprimierendes Element (280, 394) ist, welches zu einer weiteren zeitlichen Verkürzung des Laserpulses (254) führt.

15. Vorrichtung nach Anspruch 14, dadurch gekennzeichnet, daß das zweite pulskomprimierende Element (394) identisch ausgebildet ist wie das erste pulskomprimierende Element (326).

16. Vorrichtung nach einem der voranstehenden Ansprüche, dadurch gekennzeichnet, daß der Reflexionsast ein Verstärkerelement (114, 282, 382) für den Laserpuls (154, 254, 354) umfaßt.

17. Vorrichtung nach Anspruch 16, dadurch gekennzeichnet, daß der Reflexionsast den Laseroszillator (112) umfaßt und das laseraktive Medium (114) des Laseroszillators (112) das Verstärkerelement im Reflexionsast bildet.

18. Vorrichtung nach Anspruch 16 oder 17, dadurch gekennzeichnet, daß diese einen dem Laseroszillator (112) nachgeordneten Laserverstärker (282) umfaßt und daß der Laserverstärker (282) in dem Reflexionsast angeordnet ist.

19. Vorrichtung nach Anspruch 18, dadurch gekennzeichnet, daß der Reflexionsast als Reflexionselement einen zwischen dem Laseroszillator (112) und dem Laserverstärker (282) angeordneten optischen Isolator (280) umfaßt.

20. Vorrichtung nach Anspruch 19, dadurch gekennzeichnet, daß der optische Isolator (280) aus einem den Laserpuls (254) bei Überschreiten eines Intensitätsschwellwertes reflektierenden Medium ausgebildet ist.

21. Vorrichtung nach Anspruch 20, dadurch gekennzeichnet, daß der optische Isolator (280) einen hinsichtlich stimulierter Brillouinstreuung aktives Medium umfaßt, welches den Laserpuls (254) beim Überschreiten einer Schwellintensität für die stimulierte Brillouinstreuung im wesentlichen zurückreflektiert.

22. Vorrichtung nach Anspruch 20 oder 21, dadurch gekennzeichnet, daß der optische Isolator (280) als pulskomprimierendes Element ausgebildet ist.

23. Vorrichtung nach einem der Ansprüche 1 bis 18, dadurch gekennzeichnet, daß der Reflexionsast (392) vom ersten Strahlengang (324) abzweigt.

24. Vorrichtung nach Anspruch 23, dadurch gekennzeichnet, daß der Reflexionsast (392) einen Laserverstärker (382) aufweist.

25. Vorrichtung nach Anspruch 23 oder 24, dadurch gekennzeichnet, daß der Reflexionsast (392) als reflektierendes Element ein pulskomprimierendes Element (394) umfaßt.

26. Verfahren zum Erzeugen kurzer Pulse, bei welchem ein erster Laserpuls in einem Laseroszillator erzeugt wird, der erste Laserpuls in einem pulskomprimierenden Element durch stimulierte Brillouinstreuung zeitlich verkürzt und zurückreflektiert wird und in einem ersten Strahlengang, in welchem der Laseroszillator und das pulskomprimierende Element angeordnet werden, von dem Laseroszillator zum pulskomprimierenden Element wandert, dadurch gekennzeichnet, daß der zeitlich verkürzte zurückreflektierte Laserpuls nach Austritt aus dem pulskomprimierenden Element in einem Reflexionsast aufgenommen und von einem Reflexionselement wieder in das pulskomprimierenden Element zur weiteren zeitlichen Verkürzung zurückreflektiert wird und daß der Laserpuls aus einem Reflexionsstrahlengang zwischen dem Reflexionselement und dem pulskomprimierenden Element mittels eines Auskoppelelements ausgekoppelt wird.

27. Verfahren nach Anspruch 26, dadurch gekennzeichnet, daß der Laserpuls nach einer vorgebbaren Zahl von Durchläufen durch den Reflexionsstrahlengang ausgekoppelt wird.

28. Verfahren nach Anspruch 27, dadurch gekennzeichnet, daß die Durchläufe des Laserpulses durch den Reflexionsstrahlengang erfaßt werden und nach Erreichen einer vorgegebenen Zahl von Durchläufen das Auskoppelelement angesteuert wird.

## Claims

1. Device for the generation of short laser pulses, comprising a laser oscillator, which generates a first laser pulse, a pulse-compressing element, which reflects the first laser pulse as a temporally shortened laser pulse by means of stimulated Brillouin scattering, and a first optical path, in which the laser oscillator and the pulse-compressing element are arranged and along which the first laser pulse travels from the laser oscillator to the pulse-compressing element, characterised in that the device has a reflection branch, in which the temporally shortened laser pulse (154, 254, 354) reflected back enters after exiting from the pulse-compressing element (126, 226, 326), that with a reflection element (116, 280, 394), the reflection branch reflects back the temporally shortened laser pulse (154, 254, 354) into the pulse-compressing element (126, 226, 326) again to be further temporally shortened, and that in a reflection optical path between the reflection element (116, 280, 394) and the pulse-compressing element (126, 226, 326), an output coupling element (130, 132, 230, 232; 330, 396) is provided, with which the laser pulse (154, 254, 354) may be coupled out ofthe reflection optical path.

2. Device according to Claim 1, characterised in that a control means (170, 270, 370) is provided for the output coupling element (130, 132; 230, 232; 330, 396), which actuates this so that the output coupling element (130, 132; 230, 232; 330, 396) couples the laser pulse (154, 254, 354) out of the reflection optical path after a predeterminable number of reflections in the pulse-compressing element (126, 226, 326).

3. Device according to Claim 2, characterised in that the control means (170, 270, 370) is fitted with a detector (172, 272, 372), which detects the occurrence of a reflected laser pulse (154, 254, 354).

4. Device according to one of the preceding claims, characterised in that the output coupling element comprises an actuatable element for rotating polarisation (132, 232, 396) arranged in the reflection optical path and a polarisation beam splitter (130, 230, 330) arranged in the reflection optical path.

5. Device according to one of the preceding claims, characterised in that the pulse-compressing element (126, 226, 326) is constructed so that an interaction occurs between the laser pulse entering the pulse-compressing element and the acoustic phonons over less than half the pulse duration of the laser pulse.

6. Device according to one of the preceding claims, characterised in that the respective directly following laser pulse (154, 254, 354) entering the pulse-compressing element (126, 226, 326) has a higher maximum intensity than the preceding one.

7. Device according to Claim 6, characterised in that the pulse-compressing element (126, 226, 326) has an element (134, 234, 334) generating a convergent course of the beam, and that the convergent course of the beam has a length, which is a multiple of the distance between the regions (220, 202, 204) of the convergent course of the beam, in which consecutive laser pulses (154, 254, 354) reach essentially the same intensity.

8. Device according to Claim 6 or 7, characterised in that the pulse-compressing element (126, 226, 326) has a pulse compression cell (136, 236, 336) containing an active medium (142, 242, 342) with a length which amounts to a multiple of the distance which occurs between the regions (200, 202, 204) of the convergent course of the beam, in which consecutive laser pulses (154, 254, 354) reach essentially the same intensity.

9. Device according to Claim 8, characterised in that, in addition to the temporal shortening of the laser pulse, pulse shortening also occurs in the pulse-compressing element (126, 226, 326) by means of plasma generation in the active medium (142) of the pulse compression cell (136).

10. Device according to one of the preceding claims, characterised in that the reflection optical path is dimensioned such that the acoustic phonons (48) generating the reflected laser pulse are damped in the pulse-compressing element (126, 226, 326) until the laser pulse reflected in the reflection branch again enters the pulse-compressing element (126, 226, 326).

11. Device according to one of the preceding claims, characterised in that the reflection branch comprises a passive reflection element (116) for the laser pulse (154).

12. Device according to one of Claims 1 to 10, characterised in that the reflection branch has an active reflection element (280, 394) for the laser pulse (254, 354), which reflects this back to the pulse-compressing element (226, 326).

13. Device according to Claim 12, characterised in that the active reflection element is an element (280, 394) reflecting the laser pulse as a result of stimulated Brillouin scattering.

14. Device according to Claim 12 or 13, characterised in that the active reflection element is a second pulse-compressing element (280, 394), which leads to a further temporal shortening of the laser pulse (254).

15. Device according to Claim 14, characterised in that the second pulse-compressing element (394) is constructed identically to the first pulse-compressing element (326).

16. Device according to one of the preceding claims, characterised in that the reflection branch comprises an amplifier element (114, 282, 382) for the laser pulse (154, 254, 354).

17. Device according to Claim 16, characterised in that the reflection branch comprises the laser oscillator (112), and the laser-active medium (114) of the laser oscillator (112) forms the amplifier element in the reflection branch.

18. Device according to Claim 16 or 17, characterised in that this comprises a laser amplifier (282) arranged downline of the laser oscillator (112), and that the laser amplifier (282) is arranged in the reflection branch.

19. Device according to Claim 18, characterised in that the reflection branch comprises an optical insulator (280) arranged between the laser oscillator (112) and the laser amplifier (282) as a reflection element.

20. Device according to Claim 19, characterised in that the optical insulator (280) is constructed from a medium reflecting the laser pulse (254) when an intensity threshold is exceeded.

21. Device according to Claim 20, characterised in that the optical insulator (280) comprises an active medium with respect to stimulated Brillouin scattering, which essentially reflects the laser pulse back (254) when a threshold intensity for the stimulated Brillouin scattering is exceeded.

22. Device according to Claim 20 or 21, characterised in that the optical insulator (280) is constructed as a pulse-compressing element.

23. Device according to one of Claims 1 to 18, characterised in that the reflection branch (392) branches off from the first optical path (324).

24. Device according to Claim 23, characterised in that the reflection branch (392) has a laser amplifier (382).

25. Device according to Claim 23 or 24, characterised in that the reflection branch (392) comprises a pulse-compressing element (394) as reflecting element.

26. Method for generating short pulses, in which a first laser pulse is generated in a laser oscillator, the first laser pulse is temporally shortened and reflected back in a pulse-compressing element as a result of stimulated Brillouin scattering, and in a first optical path. in which the laser oscillator and the pulse-compressing element are arranged, travels from the laser oscillator to the pulse-compressing element, characterised in that, after exiting from the pulse-compressing element. the temporally shortened laser pulse reflected back is received in a reflection branch and is reflected back again into the pulse-compressing element by a reflection element for further temporal shortening, and that the laser pulse is coupled out of a reflection optical path between the reflection element and the pulse-compressing element by means of an output coupling element.

27. Method according to Claim 26, characterised in that the laser pulse is coupled out after a predeterminable number of passages through the reflection optical path.

28. Method according to Claim 27, characterised in that the passages of the laser pulse through the reflection optical path are detected and after a predetermined number of passages has been reached, the output coupling element is actuated.

## Revendications

1. Dispositif pour introduire de courtes impulsions laser, comprenant un oscillateur laser, qui produit une première impulsion laser, un élément de compression d'impulsions, qui réfléchit la première impulsion laser au moyen d'une dispersion de Brillouin stimulée sous la forme d'une impulsion laser dont la durée est réduite, et un premier trajet de rayonnement, dans lequel l'oscillateur laser et l'élément de compression d'impulsions sont disposés et le long duquel la première impulsion laser se déplace depuis l'oscillateur laser jusqu'à l'élément de compression d'impulsions, caractérisé en ce que le dispositif comporte une branche de réflexion, dans laquelle l'impulsion laser (154,254,354), qui est réfléchie en arrière et dont la durée est réduite, pénètre après être sortie de l'élément de compression d'impulsions (126,226,326), que la branche de réflexion réfléchit l'impulsion laser (154,254,354), dont la durée est réduite, au moyen d'un élément réfléchissant (116,280,394), pour l'introduire à nouveau dans l'élément de compression d'impulsions (126,226,326) pour y subir une réduction supplémentaire de durée, et que dans un trajet de rayonnement de réflexion entre l'élément réfléchissant (116,280,394) et l'élément de compression d'impulsions (126,226,326) est prévu un élément de découplage (130,132,230,232; 330,396), à l'aide duquel l'impulsion laser (154,254,354) est découplée du trajet de rayonnement de réflexion.

2. Dispositif selon la revendication 1, caractérisé en ce qu'il est prévu, pour l'élément de découplage (130,132; 230,232; 330,396), une unité de commande (170,270,370), qui exécute une commande telle qu'au bout d'un nombre pouvant être prédéterminé de réflexions dans l'élément de compression d'impulsions (126,226,326), l'élément de découplage (130,132; 230,232; 330,396) découple l'impulsion laser (154,254,354) du trajet de rayonnement de réflexion.

3. Dispositif selon la revendication 2, caractérisé en ce que l'unité de commande (170,270,370) comporte un détecteur (172,272,372), qui détecte l'apparition d'une impulsion laser réfléchie (154,254,354).

4. Dispositif selon l'une des revendications précédentes, caractérisé en ce que l'élément de découplage est un élément commandable (132,232,396), qui est disposé dans le trajet de rayonnement de réflexion et produit une rotation de polarisation, et un diviseur de faisceau de polarisation (130,230,330), qui est disposé dans un trajet de rayonnement de réflexion.

5. Dispositif selon l'une des revendications précédentes, caractérisé en ce que l'élément de compression d'impulsions (126,226,326) est agencé de telle sorte qu'une interaction entre l'impulsion laser, qui pénètre dans l'élément de compression d'impulsions, et les phonons acoustiques s'effectue sur moins d'une demi-période de l'impulsion laser.

6. Dispositif selon l'une des revendications précédentes, caractérisé en ce que l'impulsion laser immédiatement suivante (154,254,354), qui pénètre dans l'élément de compression d'impulsions (126,226,326), possède une intensité maximale supérieure à l'impulsion laser précédente.

7. Dispositif selon la revendication 6, caractérisé en ce que l'élément de compression d'impulsions (126, 226,326) possède un élément (134,234,334), qui produit une configuration de rayonnement convergente, et que la configuration de rayonnement convergente possède une longueur comprenant un multiple de la distance entre les zones (220,202,204) de la configuration de rayonnement convergente, dans lesquelles des impulsions laser successives (154,254,354) atteignent essentiellement la même intensité.

8. Dispositif selon la revendication 6 ou 7, caractérisé en ce que l'élément de compression d'impulsions (126,226,326) possède une cellule de compression d'impulsions (136,236,336), qui contient un milieu actif (142,242,342) et possède une longueur qui est égale à un multiple de la distance qui existe entre les zones (200,202,204) de la configuration de rayonnement convergente, dans lesquelles des impulsions laser successives (154,254,354) possèdent essentiellement la même intensité.

9. Dispositif selon la revendication 8, caractérisé en ce que dans l'élément de compression d'impulsions (126,226,326), en plus de la réduction de la durée de l'impulsion laser il apparaît, sur la base de la dispersion Brillouin stimulée, un raccourcissement de l'impulsion par production de plasma dans le milieu actif (142) de la cellule de compression d'impulsions (136).

10. Dispositif selon l'une des revendications précédentes, caractérisé en ce que le trajet de rayonnement de réflexion est dimensionné de telle sorte que les phonons acoustiques (48), qui produisent l'impulsion laser réfléchie, sont dissipés dans l'élément de compression d'impulsions (126,226,326) jusqu'à ce que l'impulsion laser réfléchie dans la branche de réflexion pénètre à nouveau dans l'élément de compression d'impulsions (126,226,326).

11. Dispositif selon l'une des revendications précédentes, caractérisé en ce que la branche de réflexion comprend un élément réfléchissant passif (116) pour l'impulsion laser (154).

12. Dispositif selon l'une des revendications 1 à 10, caractérisé en ce que la branche de réflexion possède un élément réfléchissant actif (280,394) pour l'impulsion laser (254,354), qui réfléchit cette impulsion en direction de l'élément de compression d'impulsions (226,326).

13. Dispositif selon la revendication 12, caractérisé en ce que l'élément réfléchissant actif est un élément (280,394), qui réalise une réflexion sous l'effet de la dispersion Brillouin stimulée.

14. Dispositif selon la revendication 12 ou 13, caractérisé en ce que l'élément réfléchissant actif est un second élément de compression d'impulsions (280,394), qui produit une réduction supplémentaire de la durée de l'impulsion laser (254).

15. Dispositif selon la revendication 14, caractérisé en ce que le second élément de compression d'impulsions (394) est identique au premier élément de compression d'impulsions (326) .

16. Dispositif selon l'une des revendications précédentes, caractérisé en ce que la branche de réflexion comprend un élément amplificateur (114,282,382) pour l'impulsion laser (154,254,354).

17. Dispositif selon la revendication 16, caractérisé en ce que la branche de réflexion comprend un oscillateur laser (112), et le milieu (114), actif pour l'effet laser, de l'oscillateur laser (112) forme l'élément amplificateur dans la branche de réflexion.

18. Dispositif selon la revendication 16 ou 17, caractérisé en ce que ce dispositif comprend un amplificateur laser (282), branché en aval de l'oscillateur laser (112), et que l'amplificateur laser (282) est disposé dans la branche de réflexion.

19. Dispositif selon la revendication 18, caractérisé en ce que la branche de réflexion comprend, comme élément réfléchissant, un isolateur optique (280) disposé entre l'oscillateur laser (112) et l'amplificateur laser (282).

20. Dispositif selon la revendication 19, caractérisé en ce que l'oscillateur optique (280) est formé par un milieu qui réfléchit l'impulsion laser (254) lors du dépassement d'une valeur de seuil d'intensité.

21. Dispositif selon la revendication 20, caractérisé en ce que l'isolateur optique (280) comprend un milieu actif pour la dispersion Brillouin stimulée et qui réfléchit pour l'essentiel l'impulsion laser (254) lors du dépassement d'une intensité de seuil pour la dispersion Brillouin stimulée.

22. Dispositif selon la revendication 20 ou 21, caractérisé en ce que l'isolateur optique (280) est agencé sous la forme d'un élément de compression d'impulsions.

23. Dispositif selon l'une des revendications 1 à 18, caractérisé en ce que la branche de réflexion (392) s'étend en dérivation à partir du premier trajet de rayonnement (324).

24. Dispositif selon la revendication 23, caractérisé en ce que la branche de réflexion (392) comporte un amplificateur laser (382).

25. Dispositif selon la revendication 23 ou 24, caractérisé en ce que la branche de réflexion (392) comprend comme élément réfléchissant un élément de compression d'impulsions (394).

26. Procédé pour produire de brèves impulsions, selon lequel une première impulsion laser est produite dans un oscillateur laser, la durée de la première impulsion laser est réduite dans un élément de compression d'impulsions au moyen d'une dispersion Brillouin stimulée et cette impulsion est réfléchie en sens inverse et se déplace dans un premier trajet de rayonnement, dans lequel l'oscillateur laser et l'élément de compression d'impulsions sont disposés, depuis l'oscillateur laser en direction de l'élément de compression d'impulsions, caractérisé en ce que l'impulsion laser réfléchie, dont la durée est réduite, est reçue dans une branche de réflexion, après sa sortie de l'élément de compression d'impulsions et est à nouveau réfléchie en sens inverse par un élément réfléchissant pour pénétrer dans l'élément de compression d'impulsions afin que sa durée soit à nouveau réduite, et que l'impulsion laser est découplée du trajet de rayonnement de réflexion entre l'élément réfléchissant et l'élément de compression d'impulsions, à l'aide d'un élément de découplage.

27. Procédé selon la revendication 26, caractérisé en ce que l'impulsion laser est découplée après un nombre pouvant être prédéterminé de passages dans le trajet de rayonnement de réflexion.

28. Procédé selon la revendication 27, caractérisé en ce que les passages de l'impulsion laser dans le trajet de rayonnement de réflexion sont détectés et que l'élément de découplage est commandé une fois qu'un nombre prédéterminé de passages est atteint.
